# EUROPEAN PATENT SPECIFICATION

(11) **EP 1 365 211 B1**
(45) Date of publication and mention of the grant of the patent: **11.07.2007**
(21) Application number: 02425320.5
(22) Date of filing: 21.05.2002
(51) Int. Cl.: G01C 19/56, G01P 15/00, G01P 15/125, G01P 9/04

(54) **Integrated gyroscope of semiconductor material with at least one sensitive axis in the sensor plane**
Aus Halbleitermaterial hergestellter integrierter Kreisel mit wenigstens einer empfindlichen Achse in der Sensorebene
Gyroscope intégré fabriqué en matière semi-conductrice avec au moins un axe sensible dans le plan du capteur

(43) Date of publication of application: 26.11.2003
(73) Proprietor: STMicroelectronics S.r.l., 20041 Agrate Brianza (Milano) (IT)
(72) Inventor: Spinola Durante, Guido, 21026 Gavirate (IT); Zerbini, Sarah, 43012 Fontanellato (IT); Merassi, Angelo, 27029 Vigevano (IT)
(74) Representative: Cerbaro, Elena

(56) References cited:
- EP-A- 1 098 170
- US-A- 5 747 690
- US-B1- 6 349 597

## Description

The present invention relates to an integrated gyroscope of semiconductor material.

As is known, integrated gyroscopes of semiconductor material, manufactured using MEMS (Micro-Electro-Mechanical Systems) technology, operate on the basis of the theorem of relative accelerations, exploiting Coriolis acceleration. In particular, when a linear velocity is applied to a movable mass rotating with angular velocity, the movable mass "feels" an apparent force, called Coriolis force, which determines a displacement thereof in a direction perpendicular to the linear velocity and to the axis of rotation. The apparent force can be hence detected by supporting the movable mass through springs which enable a displacement thereof in the direction of the apparent force. On the basis of Hooke's law, this displacement is proportional to the apparent force itself and, thus, detection of the displacement of the movable mass enables detection of Coriolis force and, hence, of the angular velocity.

In gyroscopes of the type considered, the displacement of the movable mass is detected capacitively, by measuring at resonance the variations in capacitance caused by the movement of movable detection electrodes integrally fixed to the movable mass and interfaced with, or comb-fingered to, fixed detection electrodes.

Examples of embodiment of integrated gyroscopes manufactured using MEMS technology are described, for example, in US 5, 604, 312, US 5,275,047 and WO 97/15066 in the name of Robert Bosch GmbH, and in US 5,955,668, WO 99/19734 and WO00/29855 in the name of IRVINE SENSORS CORPORATION. However, the above gyroscopes present some drawbacks.

For example, US 5,604,312 describes a gyroscope formed by an oscillating mass and a sensitive mass mounted upon the driving element. This known gyroscope involves a complicated fabrication process, which uses two different structural layers, with consequent high fabrication costs, low reliability, complication of alignment between the accelerometers and the oscillating masses, and complication in the connections.

US 5,955,668 and WO 99/19734 provide for an external oscillating mass connected to an internal sensing mass and, i.e., two independent mechanical parts which can be appropriately calibrated. However, in case of the gyroscope of circular shape (described in the patent US 5,955,668), the structure is sensitive to stresses due to the fabrication steps and to thermal drift, since the suspension springs of the sensing element internal to the oscillating external mass are very rigid in the direction of the axis of the angular velocity, and it is not possible to anchor the detection element centrally, in so far as the gyroscope would "feel" the velocity of a number of axes simultaneously and would become unusable. Instead, for the gyroscope of rectangular shape (described in the patent WO 99/19734), the system is not optimized since it uses suspension springs which involve undesired rotational contributions; moreover, the described gyroscope does not enable rejection of linear accelerations. In either case, but in particular in case of a translation gyroscope, numerous interconnections are present which pass underneath the mass, and the interconnections are quite long, with the risk of capacitive couplings with the sensing structures and hence of false or imprecise reading.

Furthermore, European patent application 01830277.8 filed on 27 April 2001 corresponding to EP-A-1 253 399 describes an integrated gyroscope comprising a sensor formed by a driving system, a sensitive mass and a mechanical linkage. The driving system is formed by a driving element having an open concave shape, and subject to a linear velocity directed in a first direction. The sensitive mass is also movable in a second direction perpendicular to the first direction and carries movable sensing electrodes. The mechanical linkage connects the driving elements to the sensitive mass. The gyroscope is sensitive to rotation about a third axis perpendicular to the former two and to the plane of the sensitive mass. The sensitive mass is surrounded on three sides by the driving element and has a peripheral portion not facing the latter. The movable sensing electrodes extend from the peripheral portion of the sensitive mass, not facing the driving element, and are comb-fingered to the fixed sensing electrodes. Thereby, there are no through electrical connections extending beneath the sensitive mass. In addition, the mechanical linkage is formed by springs arranged at equal distances with respect to the centroid of the sensitive mass, and the gyroscope is anchored to the substrate through anchoring springs arranged at equal distances with respect to the centroid of the ensemble formed by the driving system and the sensitive mass.

This previous gyroscope enables detection of the Coriolis force acting parallel to the second direction, in the sensor plane, and due to a rotation about an axis (hereinafter referred to as "sensitive axis") extending in the third direction, perpendicular to the sensor plane. By setting two gyroscopes rotated by 90° one with respect to the other on an appropriate board, it is possible to detect the apparent forces acting along two cartesian axes parallel to the plane of the gyroscope, and hence the corresponding angular accelerations. It is not, however, possible to detect the apparent force and the corresponding angular acceleration along the third cartesian axis, since in this case the third gyroscope should be mounted perpendicular to the board.

US-A-6,349,597 discloses an integrated gyroscope according to the preamble of claim 1.

The aim of the present invention is to provide a gyroscope which overcomes the limits of the previous solutions.

According to the present invention, an integrated gyroscope of semiconductor material is provided as defined in claim 1.

For an understanding of the present invention, preferred embodiments thereof will now be described, purely by way of non-limiting example, with reference to the annexed drawings, wherein:
- Figure 1 is a top plan view through the first embodiment, with single sensitive axis;
- Figure 2 illustrates a portion of the gyroscope of Figure 1, at an enlarged scale;
- Figure 3 is a cross-section taken along line III-III of Figure 1;
- Figure 4 is a cross-section taken along the line IV-IV of Figure 2;
- Figure 5 is a top plan view through a second embodiment of the invention, with single sensitive axis;
- Figure 6 is a schematic illustration in perspective view of a detail of Figure 5;
- Figure 7 is a top plan view through a third embodiment of the invention, with double sensitive axis;
- Figure 8 is a cross-section taken along the line VIII-VIII of Figure 7; and
- Figure 9 is a cross-section taken along the line IX-IX of Figure 7.

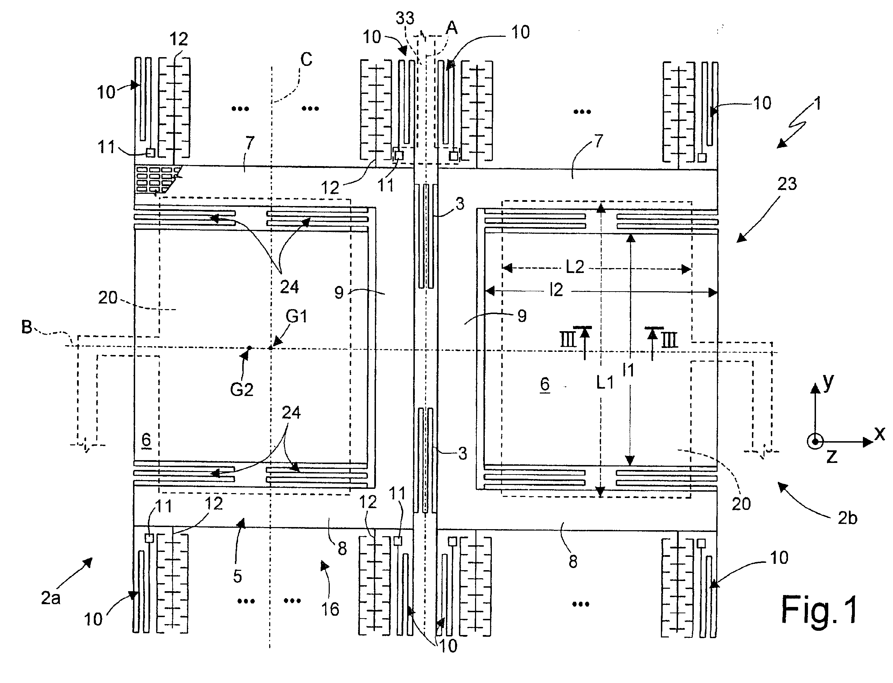

Figures 1 to 3 illustrate a gyroscope 1 according to a first embodiment of the invention. As shown in detail in Figure 1, the gyroscope 1 comprises an acceleration sensor 23 formed by two parts 2a, 2b, which are symmetrical with respect to a central axis of symmetry designated by A and connected together by two central springs 3, configured to be symmetrical with respect to a horizontal centroidal axis designated by B. Furthermore, each part 2a, 2b has a vertical centroidal axis designated by C. The axes A and C are parallel to the axis Y, while the axis B is parallel to the axis X. The intersection between the horizontal centroidal axis B and the vertical centroidal axis C constitutes the centroid G1 of each part 2a, 2b.

The acceleration sensor 23 is sensitive to an angular velocity directed parallel to the axis Y.

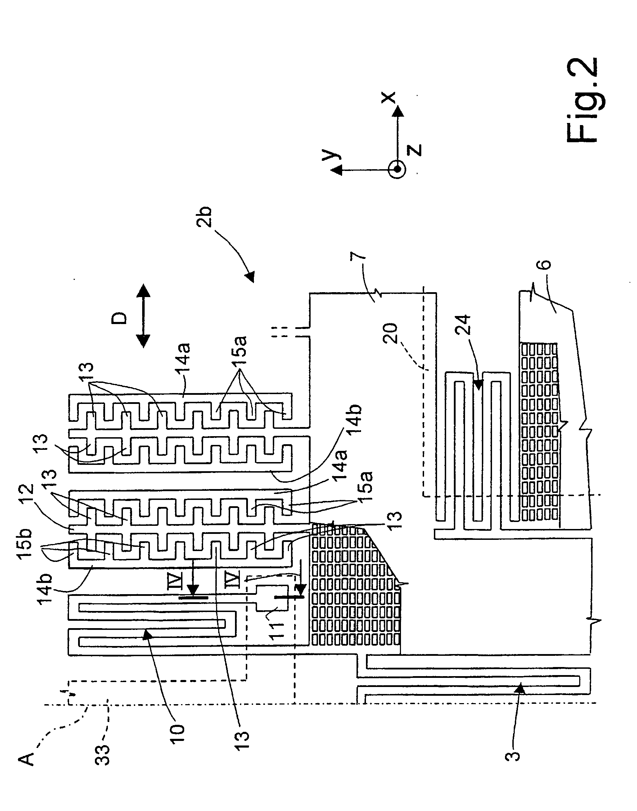

Each part 2a, 2b comprises a driving element 5 of concave shape, here a square C shape, and a sensitive mass 6, completely housed inside the space delimited by the driving element 5 but having a peripheral portion not facing the driving element 5 itself. Both the driving element 5 and the sensitive mass 6 are perforated as shown only in part in Figure 2.

Each driving element 5 is formed by a first and a second oscillating arms 7, 8, which are parallel to one another and are connected at one end by a central cross member 9 extending perpendicular to the oscillating arms 7, 8. The two cross members 9 of the parts 2a, 2b extend parallel to one another, face one another, and are connected by the central springs 3. The first oscillating arms 7 are aligned together, as also are the second oscillating arms 8.

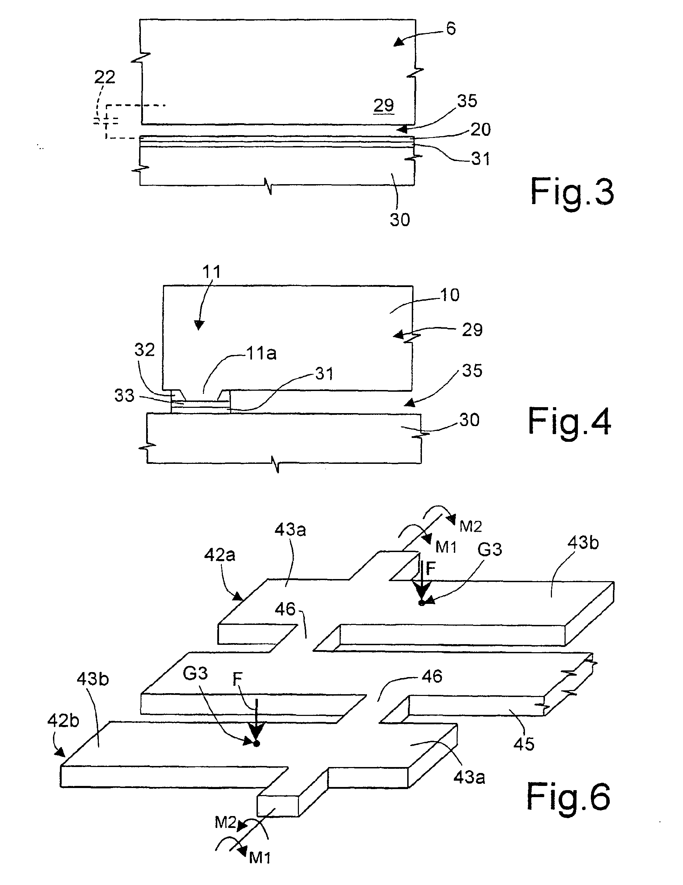

Anchoring springs 10 extend from each end of the oscillating arms 7, 8 towards the outside of the respective driving elements 5. The anchoring spring 10, which can be seen more clearly in the detail of Figure 2, are of a folded type, i.e., they comprise at least two non-aligned portions, one connected to the respective driving element 5 and one having an anchoring end 11 fixed to a fixed substrate (as described in greater detail hereinafter with reference to Figure 3). The anchoring springs 10 are equal and are arranged in pairs symmetrically with respect to the centroidal vertical axis C and the centroidal horizontal axis B, so that the anchoring springs 10 are at equal distances from one another and balanced with respect to the centroid G1 of the respective part 2a, 2b of the gyroscope. The anchoring springs 10 are here made up of four portions extending orthogonally to the arms 7, 8 and connected, in pairs, via short connection portions at their ends.

Elongated expansions, hereinafter referred to as movable driving arms 12, extend towards the outside of the oscillating arms 7, 8, orthogonally to the arms, between pairs of anchoring springs 10, symmetrically with respect to both the centroidal horizontal axis B and the centroidal vertical axis C. Each movable driving arm 12 carries a plurality of movable driving electrodes 13, extending orthogonally from either side of the respective movable driving arms 12.

Associated to each movable driving arm 12 is a first and a second fixed driving arms 14a, 14b (see Figure 2), which are parallel to the movable driving arms 12 and carry respective fixed driving electrodes 15a, 15b. The fixed driving electrodes 15a, 15b extend perpendicular to the fixed driving arms 14a, 14b towards the respective movable driving arms 12 and are comb-fingered to the movable driving electrodes 13. The first fixed driving arms 14a are arranged all on a same side of the respective movable driving arms 12 (in the example, on the right) and are all biased at a same first potential. Likewise, the second fixed driving arms 14b are all arranged on the other side of the respective movable driving arms 12 (in the example, on the left) and are all biased at a same second potential. For example, it is possible to use a push-pull biasing scheme.

The driving element 5, the movable driving arms 12, the movable driving electrodes 13, the fixed driving arms 14a, 14b, and the fixed driving electrodes 15a, 15b together form a driving system 16 for each part 2a, 2b.

The sensitive mass 6 has a basically plane shape, with the main extension in the direction of the axes X and Y. In the example illustrated, each sensitive mass 6 is rectangular in shape, with the length 11 in the Y direction, the width 12 in the X direction, and with a centroid G2, and is surrounded on three sides by the respective driving element 5.

Four coupling springs 24, of a folded type, extend between each sensitive mass 6 and the oscillating arms 7, 8 facing said mass 6, in a position symmetrical with respect to the centroid G2 of the sensitive mass 6.

The coupling springs 24 (see also Figure 2) extend mainly parallel to the oscillating arms 7, 8 and are configured so as to connect rigidly the sensitive mass 6 to the driving element 5 in a direction parallel to the axis X, to enable a limited movement of the sensitive mass 6 in the event of application of a force in the direction parallel to the axis Y, as explained hereinafter, and to enable its displacement in a direction parallel to the axis Z under the action of the apparent force due to Coriolis acceleration.

Underneath each sensitive mass 6, there extends a sensing electrode 20 of deposited doped polycrystalline silicon (for example, polysilicon deposited by low-pressure chemical vapor deposition LPCVD), the perimeter of the sensing electrode 20 being represented by a dashed line in Figure 1.

As may be seen from Figure 3, each sensitive mass 6 is separated from the respective sensing electrode 20 by an air gap 35 obtained by removal of a sacrificial material, such as deposited oxide. The sensitive mass 6 and the sensing electrode 20 thus form the plates of a capacitor 22 (represented by dashed lines in Figure 3), the dielectric whereof is formed by the air gap 35.

Each sensing electrode 20, of rectangular shape, has a length L1 in the Y direction that is greater than the length 11, and a width L2 in the X direction that is smaller than the length 12 of the respective sensitive mass 6. In particular, the length L1 of the sensing electrode 20 exceeds the length 11 of the sensitive mass 6 by an amount such that any displacement in the direction Y of the sensitive mass 6 (due to forces acting in that direction) will not reduce the facing area between the sensitive mass 6 and the sensing electrode 20. In addition, the width L2 of the sensing electrode 20 is smaller than the width 12 of the sensitive mass 6 by an amount such that any displacement of the latter in the direction X (due to the driving system 16 and/or to other forces acting in that direction) will not reduce the facing area between the sensitive mass 6 and the sensing electrode 20. In this way, capacitive coupling between the sensitive mass 6 and the sensing electrode 20 does not change following upon movements in the directions X and Y; instead, it does change for movements along the axis Z, as described below.

Figure 3 shows a cross-section through the gyroscope 1. As may be noted, the sensitive mass 6 (as also the driving element 5, the springs 10, 24, the movable driving arms 12, and the fixed driving arms 14a, 14b) is formed in a structural layer, here constituted by an epitaxial layer 29 formed on top of a substrate 30 of monocrystalline silicon. The sensing electrode 20 is formed on top of an insulating layer 31, for example, a deposited oxide layer, which is, in turn, formed on top of the substrate 30.

Figure 4 shows the cross-section of the gyroscope 1 at one anchoring end 11 of an anchoring spring 10. In particular, the anchoring end 11 has, at the bottom, a reduced portion 11a overlying, and in direct electrical contact with, a first connection region 33 of conductive material, formed in the layer of polycrystalline silicon of the sensing electrode 20 and indicated by a dashed line in Figure 1. The first connection region 33 enables biasing of the anchoring spring 10 and, more in general, of the driving element 5 and of the sensitive mass 6 at the desired potential. Figure 4 also shows the non-removed portions 32 of a sacrificial layer, which, where removed, forms the air gap 35. In Figure 4, the insulating layer 31 and the sacrificial layer 32 extend only underneath the anchoring end 11, and have been removed underneath the movable parts (here the anchoring spring 10). Similar solutions of connection are used for the fixed driving elements 14a, 14b, where, however, the sacrificial area 22 is not generally removed.

The gyroscope 1 is able to detect the magnitude of the angular velocity which causes a rotation of the gyroscope about the axis Y and hence in the plane of the sensitive mass 6. In this situation, in fact, as explained previously, the Coriolis force is directed along the axis Z and causes a displacement of the sensitive mass 6 in the same direction. Since the capacitance of the capacitor 22 formed by the sensitive mass 6 and by the sensing electrode 20 depends, in a known way, upon the distance between the plates, a special processing circuit (not shown) is able to detect the variation in capacitance and to find the magnitude of the angular velocity.

Thanks to the sizing, described above, of the sensitive mass 6 and of the sensing electrode 20, it is moreover possible to reject any accelerations or forces lying in the plane of the sensitive mass 6 and parallel to the axis Y. In fact, as indicated, the forces acting in the direction Y do not determine a modification of the facing area between the plates of the capacitor 22 and hence of its capacitance, and are not felt by the circuitry associated to the gyroscope 1.

In this way, if two gyroscopes 1 of the type described are available in a single chip, the two gyroscopes being rotated through 90° (one with driving direction parallel to the axis X and the other with driving direction parallel to the axis Y) and hence having two sensitive axes in the plane of the sensitive mass 6, but staggered by 90° with respect to one another, and if, moreover, there is available a gyroscope of a known type on the same chip, this gyroscope having a sensitive axis perpendicular to the plane of the sensitive mass 6, it is possible with a single device to detect the angular velocities along all three cartesian axes.

The gyroscope 1 has a high sensitivity thanks to the large facing area between the sensitive mass 6 and the sensing electrode 20 and supplies an output of a single-ended type.

Figure 5 illustrates an embodiment of a gyroscope 40, which supplies a differential reading of the angular velocity.

The gyroscope 40 of Figure 5 still comprises a driving system 16 of the type described with reference to Figure 1, but each driving element 5 is here E-shaped and is provided with two concavities 41a, 41b facing outwards. In practice, each driving element 5 comprises, in addition to the oscillating arms 7, 8 and the central cross member 9, an intermediate arm 45, extending parallel to the axis X. Each driving element 5 is also here supported and biased through an anchoring spring 10 of a folded type, the springs having an anchoring end 11 and being arranged symmetrically with respect to the vertical centroidal axis C.

A sensitive mass 42a, 42b is arranged inside each concavity 41a, 41b, has a generally rectangular shape and is supported in an eccentric way. In detail, each sensitive mass 42a, 42b is formed by a first smaller rectangular portion 43a and a second larger rectangular portion 43b, these portions being interconnected by a narrow portion 44. Each sensitive mass 42a, 42b has an own centroid G3.

The sensitive mass 42a is supported by two supporting arms 46a extending parallel to the cross member 9 from the narrow portion 44 towards the oscillating arm 7 and towards the intermediate arm 45. Likewise, the sensitive mass 42b is supported by two supporting arms 46b extending parallel to the cross member 9 from the narrow portion 44 towards the oscillating arm 8 and towards the intermediate arm 45. The supporting arms 46a and 46b form torsion springs.

The supporting arms 46a of each sensitive mass 42a are aligned together, as are the oscillating arms 46b of each sensitive mass 42b, but, in each part 2a, 2b, the supporting arms 46a of the sensitive mass 42a are misaligned with respect to the supporting arms 46b of the sensitive mass 42b. All of the supporting arms 46a, 46b extend at a distance from the centroid G3 of the respective sensitive mass 42a, 42b. Also here the suspended masses 42a, 42b of the two parts 2a, 2b of the gyroscope 40 are arranged symmetrically with respect to the central axis of symmetry A.

Respective sensing electrodes 48a, 48b extend underneath each portion 43a, 43b of the four suspended masses 42a, 42b. In detail, the sensing electrodes 48a face the smaller portions 43a, and the sensing electrodes 48b face the larger portions 43b. Also here the sensing electrodes 48a, 48b are formed by a polycrystalline silicon layer, separated from the respective portion 43a, 43b by an air gap, and are connected to a processing circuit (not shown).

In the gyroscope 40 of Figure 5, as illustrated in Figure 6, the Coriolis force F acting on the centroid G3 of each sensitive mass 42a, 42b determines opposite rotations of the suspended masses 42a, 42b connected to a same driving element 5, since they have the centroid G³ on opposite sides with respect to the respective supporting elements 46a, 46b. This rotation determines an opposite variation in the capacitance of the capacitors formed by each portion 43a, 43b of the suspended masses 42a, 42b and the respective sensing electrode 46a, 46b.

With the structure described, it is possible to eliminate the influence of external momenta acting on the suspended masses 42a, 42b. In fact, as shown in the simplified diagram of Figure 6 and as explained above, the couple generated by the Coriolis force F, designated by M1, has the same value, but of opposite sign, in the two accelerometers 42a, 42b carried by the same driving element 5. Instead, a possible external couple, designated by M2, acts in a concordant direction on both of the suspended masses 42a, 42b.

Consequently, by subtracting the signals supplied by the sensing electrodes 48a, 48b of each part 2a, 2b of the gyroscope 40 from one another, the effect due to the external momentum M2 is cancelled, while the effect due to the Coriolis force is summed. In this way, it is possible to determine the magnitude of the angular velocity in the direction Y, eliminating the noise due to external momenta. In addition, a more symmetrical reading is obtained, which provides a non-negligible advantage during calibration and matching of the sensing resonance frequencies.

The gyroscope 40 illustrated in Figure 5 is less sensitive than the gyroscope 1 of Figure 1, since the variation in capacitance due to rotation of the suspended masses 42a, 42b is less than the variation that may be obtained as a result of translation in the direction Z of the suspended masses 6, given the same external force F. The gyroscope 40 is, however, less subject to electrostatic pull-in due to mechanical shocks. In fact, in the gyroscope of Figure 1, on account of the biasing of the driving elements 5 and the sensing electrodes 20, it may happen that, following upon a mechanical shock, the driving elements 5 adhere to, and remain attracted by, the respective sensing electrodes 20, this being facilitated by the large facing area. Instead, with the gyroscope 40, a possible mechanical shock, such as might cause rotation of the suspended masses 42a, 42b, does not in general cause a condition of "sticking", given that in this case each sensitive mass 42a, 42b touches the respective sensing electrode 48a, 48b only along one edge instead of with the entire surface.

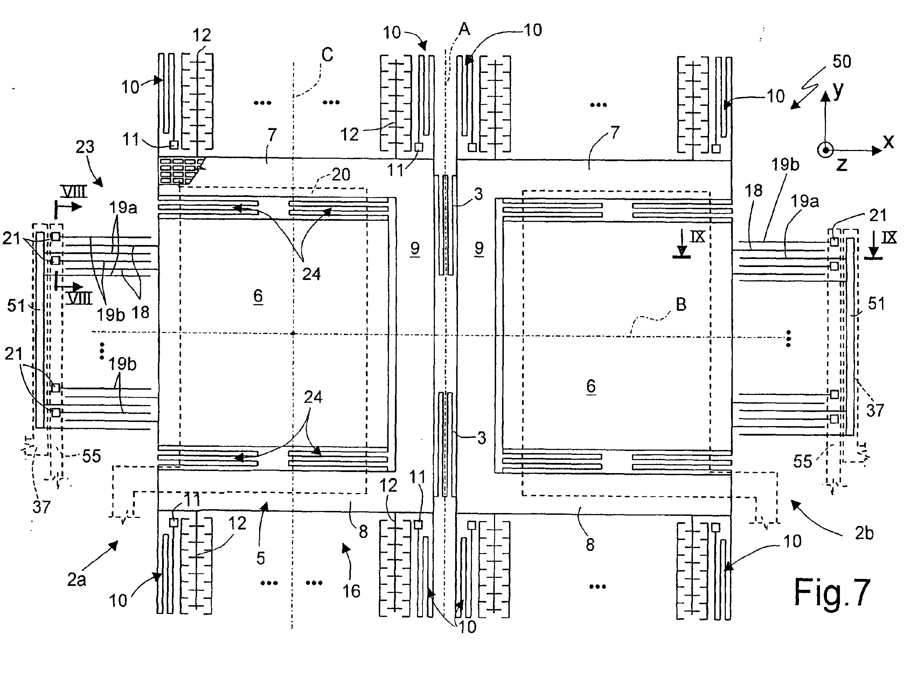

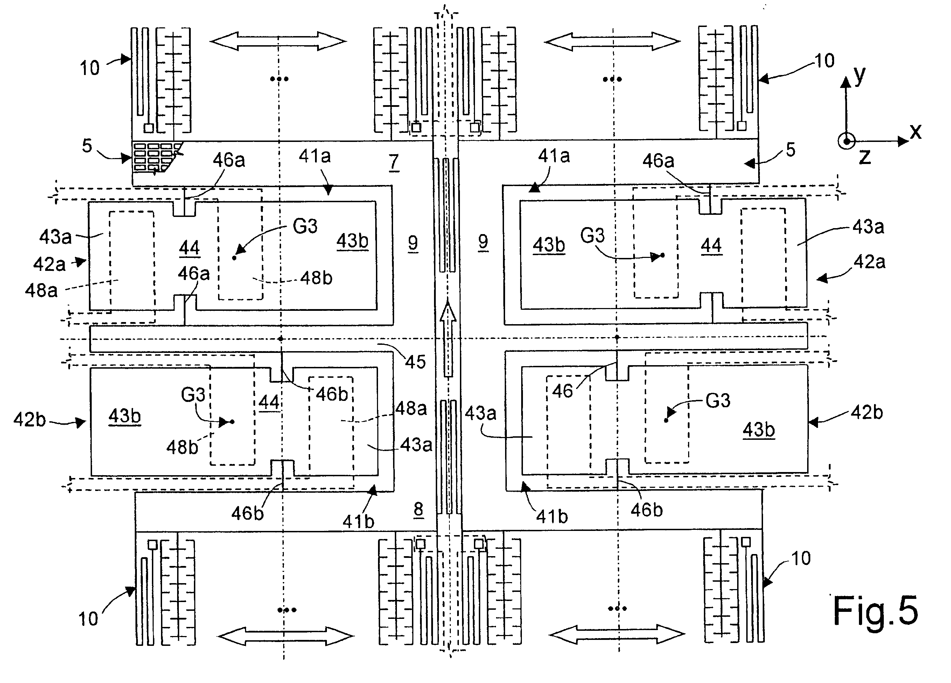

Figure 7 presents an embodiment of the gyroscope 50 with double sensitive axis. In particular, the gyroscope 50 has a first sensitive axis extending in the plane of the sensitive mass 6, parallel to the axis Y, as in the embodiment of Figure 1, and a second sensitive axis extending in a direction perpendicular to the plane of the sensitive mass 6 and parallel to the axis Z.

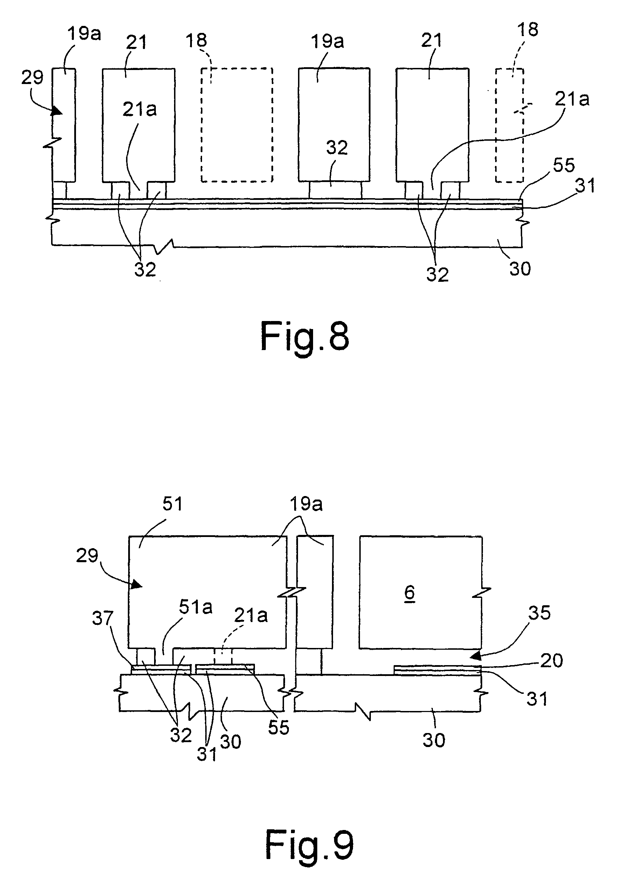

The gyroscope 50 has a basic structure similar to that of the gyroscope 1 of Figure 1, except for the fact that, in each part 2a, 2b, movable sensing electrodes 18 extend from the side of the sensitive mass 6 facing outwards, parallel to the oscillating arms 7, 8. The movable sensing electrodes 18 are comb-fingered to the fixed sensing electrodes 19a, 19b. In detail, each movable sensing electrode 18 is arranged between a fixed sensing electrode 19a and a fixed sensing electrode 19b. The fixed sensing electrodes 19a are all arranged on a first side of the movable sensing electrodes 18 and are electrically connected together at their outer ends through a first anchoring region 51. The fixed sensing electrodes 19b are all arranged on a second side of the movable sensing electrodes 18 and are electrically connected together through respective second anchoring regions 21 formed at their outer ends and connected together through a second connection region 55, represented by a dashed line in Figure 7 and illustrated in Figure 8.

The fixed sensing electrodes 19a, 19b form, with the movable sensing electrodes 18, capacitors, the capacitance of which depends upon the distance between them, in a known way. Consequently, any displacement in the direction Y of the sensitive mass 6 causes a variation of opposite sign in the voltages of the fixed sensing electrodes 19a and 19b, which is detected and processed by an appropriate circuit (not shown) in a known way.

Figure 8 is a cross-sectional view through the gyroscope at the second anchoring region 21 of the fixed sensing electrodes 19b. Here the second anchoring regions 21, which are formed in the same structural layer as the anchoring springs 10, i.e., the epitaxial layer 29, have at the bottom a reduced portion 21a formed by the epitaxial layer 29 itself, which overlies and is in direct electrical contact with the second connection region 55 formed in the same layer as the sensing electrodes 20. The second connection region 55 is formed on top of the insulating layer 31 and underneath the sacrificial layer 32, of which only some portions are visible, which have remained after the movable parts of the gyroscope 50 have been freed. The cross-section of Figure 8 also shows the fixed sensing electrodes 19a and, in a plane set back with respect to the plane of the cross section, the movable sensing electrodes 18, drawn with a dashed line.

Figure 9 is a cross-section through the gyroscope 50 taken along a fixed sensing electrode 19a. As may be noted, the first anchoring region 51 is formed in the epitaxial layer 29 and has, at the bottom, a reduced portion 51a formed by the epitaxial layer 29, which overlies and is in direct electrical contact with a third connection region 37 of conductive material, formed in the same layer as the sensing electrodes 20 and the second (polysilicon) connection region 55, on top of the insulating layer 31 and underneath the sacrificial layer 32.

The gyroscope 50 of Figures 7 to 9 is able to detect forces acting in the direction Z (sensitive axis parallel to the axis Y) as has been described with reference to Figure 1. In addition, the gyroscope is able to detect forces acting in the direction of the axis Y (sensitive axis parallel to the axis Z), in so far as any displacement in the direction Y is detected as a variation in capacitance between the movable sensing electrodes 18 and the fixed sensing electrodes 19a, 19b.

In the gyroscope 50 it is possible to distinguish the effects of forces or of components thereof acting in the three directions. In fact, the displacements in the direction X (due to driving or to external forces) are not detected by the sensing electrodes 20, as mentioned with reference to Figure 1, and cause a same capacitive variation on the fixed sensing electrodes 19a and 19b and can thus be rejected. The displacements along the axis Y are not detected by the sensing electrodes 20, as mentioned previously with reference to the embodiment of Figure 1, but are detected by the fixed electrodes 19a and 19b, as explained above. The displacements along the axis Z are detected by the sensing electrode 20, as mentioned previously with reference to Figures 1-3. Their effect on the fixed sensing electrodes 19a and 19b can, instead, be rejected since they detect a same capacitive variation with respect to the movable sensing electrodes 18, as for the displacements in the direction X.

The advantages of the described gyroscope are the following. First, it is possible to have, on a single plane, the sensitive elements that are able to detect forces acting along three cartesian axes, this enabling a reduction in the overall dimensions of a three-axes gyroscope. The advantage is all the greater in case of the third embodiment, where a single sensor 23 is able to measure forces acting in two perpendicular directions, and hence only two sensors are necessary for a three dimension measure. The compactness of the sensors and the reduction in their number further enable reduction in costs for manufacturing the gyroscope.

Each sensor 23 and each sensing set is moreover sensitive only to the forces acting in the respective directions, and rejects actions in a perpendicular direction. Thus a high sensing precision is achieved. The sensing precision may be increased even further by designing the thicknesses of the various layers so as to assign different degrees of sensitivity in the different directions, in particular, in the third embodiment.

The first and the third embodiments have high sensitivity and hence are particularly suited in the case of low angular velocities; instead, the second embodiment, as mentioned previously, enables use of a simpler circuitry and makes it possible to avoid the risk of electrostatic pull-in.

Finally, it is clear that numerous modifications and variations may be made to the gyroscope described and illustrated herein, all falling within the scope of the invention as defined in the attached claims.

## Claims

1. An integrated gyroscope (1; 40; 50), including an acceleration sensor (23) comprising:
a driving assembly (16) ;
at least one sensitive mass (6; 42a, 42b) extending in at least one first direction (X) and at least one second direction (Y), said sensitive mass being moved by said driving assembly 16 in said first direction (X);
a capacitive sensing electrode (20; 48a, 48b), facing said sensitive mass;
wherein said acceleration sensor (23) has a rotation axis (A) parallel to said second direction (Y), and said sensitive mass (6; 42a, 42b) is sensitive to forces acting in a third direction (Z) perpendicular to said first and second directions, said said capacitive sensing electrode (20; 48a, 48b) comprising at least one conductive material region extending underneath and at a distance, in said third direction, from said sensitive mass (6; 42a, 42b), and said driving assembly (16) comprises a driving element (5) connected to said sensitive mass (6; 42a, 42b) through a mechanical linkage (24; 46a, 46b), which enables, at least to one part of said sensitive mass, a movement having a component in said third direction (Z), **characterized in that** said driving element (5) has an open concave shape partially surrounding said sensitive mass (6), and said sensitive mass (6) has a peripheral portion not facing said driving element.

2. The gyroscope according to claim 1, wherein said sensitive mass (6) can be translated parallel to said third direction (Z).

3. The gyroscope according to claim 1, wherein said sensitive mass (6) and said capacitive sensing electrode (20) have a reciprocal facing area that is constant in presence of movements of said sensitive mass in said first direction (X) and/or in said second direction (Y).

4. The gyroscope according to claim 2 or 3, wherein said sensitive mass (6) and said capacitive sensing electrode (20) have a rectangular shape, a first one (6) between said sensitive mass and said capacitive sensing electrode having a length (12) in said first direction (X) greater than another one (20) between said sensitive mass and said capacitive sensing electrode, and a second one (20) between said sensitive mass and said capacitive sensing electrode having a length (L1) in said second direction (Y) greater than another one (6) between said sensitive mass and said capacitive sensing electrode.

5. The gyroscope according to any of claims 1-4, further comprising movable sensing electrodes (18) extending from said peripheral portion of said sensitive mass (6) in said first direction (X), said movable sensing electrodes being comb-fingered to fixed sensing electrodes (19a, 19b) for detecting movements of said sensitive mass (6) in said second direction (Y).

6. The gyroscope according to claim 1, wherein said at least one sensitive mass (42a) can turn about an eccentric axis (46a) parallel to said second direction (Y).

7. The gyroscope according to claim 6, wherein said at least one sensitive mass (42a) has a first centroid (G3), and said mechanical linkage comprises a first pair of supporting arms (46a) aligned to one another and defining said eccentric axis, said supporting arms (46a) of said first pair extending between said driving element (5) and said at least one sensitive mass (42a), eccentrically with respect to said first centroid.

8. The gyroscope according to claim 7, wherein said driving element (5) is E-shaped and comprises a first and a second oscillating arms (7, 8) and an intermediate arm (45) extending parallel to said first direction (X), said at least one sensitive mass (42a) extending between said first oscillating arm (7) and said intermediate arm (45), a second sensitive mass (42b) extending between said second oscillating arm (8) and said intermediate arm (45), having a second centroid (G3) and being supported by a second pair of supporting arms (46b), said supporting arms (46b) of said second pair extending eccentrically with respect to said second centroid.

9. The gyroscope according to claim 8, wherein said supporting arms (46b) of said second pair are misaligned with respect to said supporting arms (46a) of said first pair.

10. The gyroscope according to claim 8 or claim 9, wherein said at least one sensitive mass (42a) and said second sensitive mass (42b) have a generally rectangular shape and comprise a first portion (43a) that is smaller and a second portion (43b) that is larger, arranged on opposite sides with respect to the respective supporting arms (46a, 46b), and wherein a differential sensing electrode (48a, 48b) faces a respective one of said first and second portions of said at least one sensitive mass (42a) and said second sensitive mass (42b) .

11. The gyroscope according to any one of the preceding claims, wherein said driving element (5) and said sensitive mass (6; 42a, 42b) are formed in a same structural layer (29).

12. The gyroscope according to claim 11, wherein said driving element (5) and said sensitive mass (6; 42a, 42b) extend on top of a conductive material body (30) and are spaced therefrom by an air gap (35), and said capacitive sensing electrode (20; 48a, 48b) is formed by a semiconductor material region extending on top of said conductive material body (30) and insulated therefrom, said semiconductor material region extending beneath said air gap.

13. The gyroscope according to any of the preceding claims, wherein said driving assembly (16) further comprises a plurality of movable driving electrodes (13) extending from said driving element (5) and comb-fingered to a plurality of fixed driving electrodes (15a, 15b).

14. The gyroscope according to any one of the preceding claims, comprising two symmetrical parts (2a, 2b) connected by central springs (3) and each including an own driving assembly (16), an own sensitive mass (6; 42a, 42b), and an own capacitive sensing electrode (20; 48a, 48b).

## Patentansprüche

1. Integriertes Gyroskop (1; 40; 50), das einen Beschleunigungssensor (23) aufweist, welcher aufweist:
eine Antriebsanordnung (16);
zumindest eine sensitive Masse (6; 42a, 42b), die sich in zumindest einer ersten Richtung (X) und zumindest einer zweiten Richtung (Y) erstreckt, wobei die sensitive Masse durch die Antriebsanordnung 16 in der ersten Richtung (X) bewegt wird;
eine kapazitive Messelektrode (20; 48a, 48b), die der sensitiven Masse zugewandt ist;
wobei der Beschleunigungssensor (23) eine Drehachse (A) parallel zu der zweiten Richtung (Y) aufweist und die sensitive Masse (6; 42a, 42b) empfindlich auf Kräfte reagiert, die in einer dritten Richtung (Z) senkrecht zu der ersten Richtung und der zweiten Richtung wirken, wobei die kapazitive Messelektrode (20; 48a, 48b) zumindest einen Bereich leitfähigen Materials aufweist, der sich unterhalb und in einem Abstand in der dritten Richtung von der sensitiven Masse (6; 42a, 42b) erstreckt, und die Antriebsanordnung (16) ein mit der sensitiven Masse (6; 42a, 42b) durch eine mechanische Verbindung (24; 46a, 46b) verbundenes Antriebselement (5) aufweist, welches zumindest an einem Teil der sensitiven Masse eine Bewegung ermöglicht, die eine Komponente in der dritten Richtung (Z) aufweist,
**dadurch gekennzeichnet, dass**
das Antriebselement (5) eine offene konkave Form aufweist, die die sensitive Masse (6) teilweise umgibt, und die sensitive Masse (6) einen peripheren Abschnitt aufweist, der dem Antriebselement nicht zugewandt ist.

2. Gyroskop gemäß Anspruch 1, wobei die sensitive Masse (6) parallel zu der dritten Richtung (Z) verrückt werden kann.

3. Gyroskop gemäß Anspruch 1, wobei die sensitive Masse (6) und die kapazitive Messelektrode (20) eine gegenseitig zugewandte Fläche aufweisen, die in Gegenwart von Bewegungen der sensitiven Masse in der ersten Richtung (X) und/oder in der zweiten Richtung (Y) konstant ist.

4. Gyroskop gemäß Anspruch 2 oder 3, wobei die sensitive Masse (6) und die kapazitive Messelektrode (20) eine rechteckige Form aufweisen, wobei eine erste (6) von der sensitiven Masse und der kapazitiven Messelektrode eine Länge (12) in der ersten Richtung (X) größer als die der anderen (20) von der sensitiven Masse und der kapazitiven Messelektrode aufweist, und wobei eine zweite (20) von der sensitiven Masse und der kapazitiven Messelektrode eine Länge (L1) in der zweiten Richtung (Y) größer als die der anderen (6) von der sensitiven Masse und der kapazitiven Messelektrode aufweist.

5. Gyroskop gemäß irgendeinem der Ansprüche 1 bis 4, das ferner bewegliche Messelektroden (18) aufweist, die sich von dem peripheren Abschnitt der sensitiven Masse (6) in der ersten Richtung (X) erstrecken, wobei die beweglichen Messelektroden kammfingrig zu ortsfesten Messelektroden (19a, 19b) zum Erfassen von Bewegungen der sensitiven Masse (6) in der zweiten Richtung (Y) sind.

6. Gyroskop gemäß Anspruch 1, wobei sich die zumindest eine sensitive Masse (42a) um eine exzentrische Achse (46a) parallel zu der zweiten Richtung (Y) drehen kann.

7. Gyroskop gemäß Anspruch 6, wobei die zumindest eine sensitive Masse (42a) einen ersten Schwerpunkt (G3) aufweist und die mechanische Verbindung ein erstes Paar Stützarme (46a) aufweist, die zueinander fluchtend sind und die exzentrische Achse definieren, wobei sich die Stützarme (46a) des ersten Paares zwischen dem Antriebselement (5) und der zumindest einen sensitiven Masse (42a) exzentrisch bezüglich des ersten Schwerpunkts erstrecken.

8. Gyroskop gemäß Anspruch 7, wobei das Antriebselement (5) E-förmig ist und einen ersten Schwingarm (7) und einen zweiten Schwingarm (8) und einen Zwischenarm (45) aufweist, die sich parallel zu der ersten Richtung (X) erstrecken, wobei sich die zumindest eine sensitive Masse (42a) zwischen dem ersten Schwingarm (7) und dem Zwischenarm (45) erstreckt, wobei sich eine zweite sensitive Masse (42b), die einen zweiten Schwerpunkt (G3) aufweist und durch ein zweites Paar Stützarme (46b) abgestützt wird, zwischen dem zweiten Schwingarm (8) und dem Zwischenarm (45) erstreckt, wobei sich die Stützarme (46b) des zweiten Paares exzentrisch bezüglich des zweiten Schwerpunkts erstrecken.

9. Gyroskop gemäß Anspruch 8, wobei die Stützarme (46b) des zweiten Paares nichtfluchtend bezüglich der Stützarme (46a) des ersten Paares sind.

10. Gyroskop gemäß Anspruch 8 oder Anspruch 9, wobei die zumindest eine sensitive Masse (42a) und die zweite sensitive Masse (42b) eine hauptsächlich rechteckige Form haben und einen ersten Abschnitt (43a), der kleiner ist, und einen zweiten Abschnitt (43b), der größer ist, die an entgegengesetzten Seiten bezüglich der jeweiligen Stützarme (46a, 46b) angeordnet sind, aufweisen, und wobei eine Differential-Messelektrode (48a, 48b) einem jeweiligen von dem ersten Abschnitt und dem zweiten Abschnitt der zumindest einen sensitiven Masse (42a) und der zweiten sensitiven Masse (42b) gegenüberliegt.

11. Gyroskop gemäß irgendeinem der vorhergehenden Ansprüche, wobei das Antriebselement (5) und die sensitive Masse (6; 42a, 42b) in einer selben Strukturschicht (29) gebildet sind.

12. Gyroskop gemäß Anspruch 11, wobei sich das Antriebselement (5) und die sensitive Masse (6; 42a, 42b) oben auf einem Körper leitfähigen Materials (30) erstrecken und von diesem durch einen Luftspalt (35) mit Abstand angeordnet sind und die kapazitive Messelektrode (20; 48a, 48b) durch einen Halbleitermaterial-Bereich gebildet ist, der sich oben auf dem Körper leitfähigen Materials (30) erstreckt und von diesem isoliert ist, wobei sich der Halbleitermaterial-Bereich unterhalb des Luftspalts erstreckt.

13. Gyroskop gemäß irgendeinem der vorhergehenden Ansprüche, wobei die Antriebsanordnung (16) ferner eine Mehrzahl beweglicher Antriebselektroden (13) aufweist, die sich von dem Antriebselement (5) und kammfingrig zu einer Mehrzahl ortsfester Antriebselektroden (15a, 15b) erstrecken.

14. Gyroskop gemäß irgendeinem der vorhergehenden Ansprüche, das zwei durch Mittelfedern (3) verbundene symmetrische Teile (2a, 2b) aufweist und jedes eine eigene Antriebsanordnung (16), eine eigene sensitive Masse (6; 42a, 42b) und eine eigene kapazitive Messelektrode (20; 48a, 48b) aufweist.

## Revendications

1. Gyroscope intégré (1; 40; 50), incluant un capteur d'accélération (23) comprenant :
un assemblage d'entraînement (16) ;
au moins une masse sensible (6 ; 42a; 42b) s'étendant dans au moins une première direction (X) et au moins une deuxième direction (Y), ladite masse sensible étant déplacée par ledit assemblage d'entraînement 16 dans ladite première direction (X);
une électrode de détection capacitive (20 ; 48a ; 48b), faisant face à ladite masse sensible ;
dans lequel ledit capteur d'accélération (23) a un axe de rotation (A) parallèle à ladite deuxième direction (Y), et ladite masse sensible (6 ; 42a ; 42b) est sensible à des forces agissant dans une troisième direction (Z) perpendiculaire auxdites première et deuxième directions, ladite électrode de détection capacitive (20 ; 48a ; 48b) comprenant au moins une région de matériau conducteur s'étendant en dessous et à une distance, dans ladite troisième direction, de ladite masse sensible (6 ; 42a ; 42b), et ledit assemblage d'entraînement (16) comprend un élément d'entraînement (5) connecté à ladite masse sensible (6; 42a ; 42b) à travers une liaison mécanique (24 ; 46a ; 46b), qui permet, au moins à une partie de ladite masse sensible, un mouvement ayant une composante dans ladite troisième direction (Z), **caractérisé en ce que** ledit élément d'entraînement (5) a une forme concave ouverte entourant partiellement ladite masse sensible (6), et ladite masse sensible (6) a une portion périphérique ne faisant pas face audit élément d'entraînement.

2. Gyroscope selon la revendication 1, dans lequel ladite masse sensible (6) peut être translatée de manière parallèle à ladite troisième direction (Z).

3. Gyroscope selon la revendication 1, dans lequel ladite masse sensible (6) et ladite électrode de détection capacitive (20) ont une superficie où elles se font face de manière réciproque qui est constante en présence de mouvements de ladite masse sensible dans ladite première direction (X) et/ou dans ladite deuxième direction (Y).

4. Gyroscope selon la revendication 2 ou 3, dans lequel ladite masse sensible (6) et ladite électrode de détection capacitive (20) ont une forme rectangulaire, une première (6) parmi ladite masse sensible et ladite électrode de détection capacitive ayant une longueur (12) dans ladite première direction (X) plus grande qu'une autre (20) parmi ladite masse sensible et ladite électrode de détection capacitive, et une deuxième (20) parmi ladite masse sensible et ladite électrode de détection capacitive ayant une longueur (L1) dans ladite deuxième direction (Y) plus grande qu'une autre (6) parmi ladite masse sensible et ladite électrode de détection capacitive.

5. Gyroscope selon l'une quelconque des revendications 1-4, comprenant en plus des électrodes de détection mobiles (18) s'étendant à partir de ladite portion périphérique de ladite masse sensible (6) dans ladite première direction (X), lesdites électrodes de détection mobiles étant emboîtées comme en dents de peigne aux électrodes de détection fixes (19a, 19b) pour détecter des mouvements de ladite masse sensible (6) dans ladite deuxième direction (Y).

6. Gyroscope selon la revendication 1, dans lequel ladite au moins une masse sensible (42a) peut tourner autour d'un axe excentrique (46a) parallèle à ladite deuxième direction (Y).

7. Gyroscope selon la revendication 6, dans lequel ladite au moins une masse sensible (42a) a un premier centroïde (G3), et ladite liaison mécanique comprend une première paire de bras de support (46a) alignés l'un avec l'autre et définissant ledit axe excentrique, lesdits bras de support (46a) de ladite première paire s'étendant entre ledit élément d'entraînement (5) et ladite au moins une masse sensible (42a), de manière excentrique par rapport audit premier centroïde.

8. Gyroscope selon la revendication 7, dans lequel ledit élément d'entraînement (5) est en forme de E et comprend un premier et un deuxième bras oscillants (7, 8) et un bras intermédiaire (45) s'étendant de manière parallèle à ladite première direction (X), ladite au moins une masse sensible (42a) s'étendant entre ledit premier bras oscillant (7) et ledit bras intermédiaire (45), une deuxième masse sensible (42b) s'étendant entre ledit deuxième bras oscillant (8) et ledit bras intermédiaire (45), ayant un deuxième centroïde (G3) et étant soutenue par une deuxième paire de bras de support (46b), lesdits bras de support (46b) de ladite deuxième paire s'étendant de manière excentrique par rapport audit deuxième centroïde.

9. Gyroscope selon la revendication 8, dans lequel lesdits bras de support (46b) de ladite deuxième paire sont mal alignés par rapport auxdits bras de support (46a) de ladite première paire.

10. Gyroscope selon la revendication 8 ou la revendication 9, dans lequel ladite au moins une masse sensible (42a) et ladite deuxième masse sensible (42b) ont une forme généralement rectangulaire et comprennent une première portion (43a) qui est plus petite et une deuxième portion (43b) qui est plus grande, agencées sur des côtés opposés par rapport aux bras de support respectifs (46a, 46b), et où une électrode de détection différentielle (48a, 48b) fait face à l'une respective desdites première et deuxième portions de ladite au moins une masse sensible (42a) et ladite deuxième masse sensible (42b).

11. Gyroscope selon l'une quelconque des revendications précédentes, dans lequel ledit élément d'entraînement (5) et ladite masse sensible (6 ; 42a ; 42b) sont formés dans une même couche structurelle (29).

12. Gyroscope selon la revendication 11, dans lequel ledit élément d'entraînement (5) et ladite masse sensible (6 ;42a ;42b) s'étendent sur le dessus d'un corps de matériau conducteur (30) et en sont espacés par un entrefer (35), et ladite électrode de détection capacitive (20 ; 48a ; 48b) est formée par une région de matériau semi-conducteur s'étendant sur le dessus dudit corps de matériau conducteur (30) et en est isolée, ladite région de matériau semi-conducteur s'étendant en dessous dudit entrefer.

13. Gyroscope selon l'une quelconque des revendications précédentes, dans lequel ledit assemblage d'entraînement (16) comprend en plus une pluralité d'électrodes d'excitation mobiles (13) s'étendant à partir dudit élément d'entraînement (5) et emboîtées comme en dents de peigne à une pluralité d'électrodes d'excitation fixes (15a, 15b).

14. Gyroscope selon l'une quelconque des revendications précédentes, comprenant deux parties symétriques (2a, 2b) connectées par des ressorts centraux (3) et chacune incluant un assemblage d'entraînement qui lui est propre (16), une masse sensible qui lui est propre (6 ; 42a ; 42b), et une électrode de détection capacitive qui lui est propre (20 ; 48a ; 48b).
